# EUROPEAN PATENT APPLICATION

(11) **EP 4 708 417 A1**
(43) Date of publication of application: **11.03.2026**
(21) Application number: 24860075.1
(22) Date of filing: 11.06.2024
(51) Int. Cl.: H01M 10/04, H01M 4/04

(54) **BATTERY CELL PRESSURIZING DEVICE AND BATTERY CELL MANUFACTURING SYSTEM INCLUDING SAME**

(30) Priority: 01.09.2023 KR 20230116506
(71) Applicant: LG Energy Solution, Ltd., Seoul 07335 (KR)
(72) Inventor: JEON, Sang-Chul, Daejeon 34122 (KR)
(74) Representative: Goddar, Heinz J.
(86) International application number: PCT/KR2024/007972
(87) International publication number: WO 2025/048150

(57) **Abstract**

Disclosed is a battery cell pressurizing device, which includes a plurality of mounting tables respectively configured so that at least one battery cell is mounted thereon, the plurality of mounting tables being arranged side by side in one direction; a pressurizing unit configured to pressurize the battery cells mounted on the plurality of mounting tables by pressing the plurality of mounting tables in a direction in which the plurality of mounting tables come into close contact with each other; and a plurality of pressure-sensitive sensors distributed on the plurality of mounting tables and configured to detect pressure applied to the battery cells mounted on each mounting table separately for each battery cell or to detect the pressure separately for different parts of each battery cell.

## Description

### TECHNICAL FIELD

The present application claims priority to Korean Patent Application No. 10-2023-0116506 filed on September 1, 2023 in the Republic of Korea, the disclosures of which are incorporated herein by reference.

The present disclosure relates to a battery cell pressurizing device and a battery cell manufacturing system including the same, and more specifically, to a battery cell pressurizing device used to pressurize battery cells assembled in a battery cell manufacturing process, and a battery cell manufacturing system including the battery cell pressurizing device.

### BACKGROUND ART

In general, secondary batteries indicate batteries capable of being repeatedly charged and discharged, such as lithium-ion batteries, lithium-polymer batteries, nickelcadmium batteries, nickel-hydrogen batteries, nickel-zinc batteries, and the like. A battery cell, which is the most basic secondary battery, may provide an output voltage of approximately 2.5V to 4.2V.

The battery cell is assembled by accommodating an electrode assembly, which is formed by stacking a positive electrode and a negative electrode with a separator interposed therebetween, in a case together with an electrolyte material, and sealing the corresponding case. The battery cell assembled in this way undergoes a pressurization process in which the battery cell is pressurized to a predetermined pressure during the activation or testing stage. Since the pressurization process is carried out to pressurize several to dozens of battery cells simultaneously to increase process efficiency, pressure deviations may occur between the battery cells.

Therefore, there is required a technology to monitor the pressure applied to battery cells in real time during the pressurization process and to quickly respond to pressure deviations between the battery cells.

However, in the existing technology of measuring the pressure of a pressurizing device using a separate pressure sensitive paper or pressure measuring device, the pressure sensitive paper or pressure measuring device must be installed in the pressurizing device to measure the pressing force of the corresponding pressurizing device before the pressurization process, and the pressure sensitive paper or pressure measuring device must be removed. For this reason, the pressurization process requires a lot of time and money, and there is a problem in that the pressure applied to the battery cells cannot be monitored in real time.

In addition, as disclosed in Korean Unexamined Patent Publication No. 10-2022-0101269, the existing technology measures the overall pressure applied to the battery cells using a load cell installed in the pressurizing device, and thus it is not possible to detect pressure deviations generated between the battery cells or pressure deviations generated between different parts of a specific battery cell. As a result, the uniformity of quality of manufactured battery cells cannot be guaranteed and the defect rate cannot be reduced.

### DISCLOSURE

### Technical Problem

The present disclosure is designed to solve the problems of the related art, and therefore the present disclosure is directed to providing a battery cell pressurizing device, which may monitor pressure applied to battery cells in real time while reducing the time and cost of a pressurization process that pressurizes the battery cells, and a battery cell manufacturing system including the same.

The present disclosure is also directed to providing a battery cell pressurizing device, which may guarantee uniformity of quality of manufactured battery cells and reduce the defect rate by detecting pressure deviations between battery cells or pressure deviations between different parts of a specific battery cell during the pressurization process, and a battery cell manufacturing system including the same.

### Technical Solution

In one aspect of the present disclosure, there is provided a battery cell pressurizing device, comprising: a plurality of mounting tables respectively configured so that at least one battery cell is mounted thereon, the plurality of mounting tables being arranged side by side in one direction; a pressurizing unit configured to pressurize the battery cells mounted on the plurality of mounting tables by pressing the plurality of mounting tables in a direction in which the plurality of mounting tables come into close contact with each other; and a plurality of pressure-sensitive sensors distributed on the plurality of mounting tables and configured to detect pressure applied to the battery cells mounted on each mounting table separately for each battery cell or to detect the pressure separately for different parts of each battery cell.

In an embodiment, each of the plurality of mounting tables may have a mounting groove in which the at least one battery cell is mounted.

In an embodiment, each of the plurality of pressure-sensitive sensors may be disposed inside the mounting groove of a corresponding mounting table among the plurality of mounting tables.

In an embodiment, each of the plurality of pressure-sensitive sensors may be disposed between an inner surface of the mounting groove and the battery cell mounted in the mounting groove, and have a strap shape extending along the inner surface of the mounting groove.

In an embodiment, the battery cell pressurizing device may comprise a buffer pad disposed between an inner surface of the mounting groove and the battery cell mounted in the mounting groove to relieve pressure applied to the mounted battery cell.

In an embodiment, the plurality of pressure-sensitive sensors may include pressure-sensitive sensors disposed together on the same mounting table, and the pressure-sensitive sensors disposed together on the same mounting table may be configured to detect pressure applied to different parts of the battery cell mounted on the same mounting table.

In an embodiment, the plurality of mounting tables may include a first mounting table and a second mounting table arranged adjacent to each other, and the first mounting table may include a mounting portion on which a first battery cell is mounted; and a pressurizing portion configured to pressurize a second battery cell mounted on the second mounting table by the pressing force of the pressurizing unit.

In an embodiment, the battery cell pressurizing device may comprise a stopper interposed between neighboring mounting tables among the plurality of mounting tables to limit a gap between the neighboring mounting tables.

In an embodiment, the stopper may have a plate structure and have a through hole at a center of the plate structure where the battery cell mounted on one of the neighboring mounting tables is located.

In an embodiment, the battery cell pressurizing device may comprise a control unit configured to detect an abnormal battery cell to which pressure that does not meet a predetermined pressure condition is applied among the battery cells, by using the detection results of the plurality of pressure-sensitive sensors.

In an embodiment, the control unit may be configured to stop the operation of the pressurizing unit when the abnormal battery cell is detected.

In an embodiment, the battery cell pressurizing device may comprise an output unit configured to output identification information identifying the mounting table on which the abnormal battery cell is mounted among the plurality of mounting tables when the abnormal battery cell is detected by the control unit.

A battery cell manufacturing system according to another aspect of the present disclosure includes the battery cell pressurizing device according to any one of the embodiments described above.

### Advantageous Effects

According to the present disclosure, since a plurality of pressure-sensitive sensors are distributed on a plurality of mounting tables respectively configured so that at least one battery cell is mounted thereon and the pressure applied to the battery cell mounted on each mounting table is detected in real time, the time and cost of the pressurization process that pressurizes the battery cells may be reduced, and the pressure applied to the battery cells may be monitored in real time.

In addition, since the pressure-sensitive sensors disposed together on the same mounting table among the plurality of mounting tables detect pressures applied to different parts of the battery cell mounted on the same mounting table, it is possible to detect not only pressure deviations between the battery cells but also pressure deviations between different parts of a specific battery cell, and as a result, it is possible to guarantee the uniformity of quality of manufactured battery cells and reduce the defect rate.

In addition, since the control unit detect an abnormal battery cell to which pressure that does not meet a predetermined pressure condition is applied among the battery cells pressurized by the pressurizing unit by using the detection results of the plurality of pressure-sensitive sensors, rapid response is possible when an abnormal battery cell occurs.

Furthermore, those skilled in the art to which the present disclosure pertains will be able to clearly understand from the following description that various embodiments according to the present disclosure are able to solve various technical problems not mentioned above.

### DESCRIPTION OF DRAWINGS

FIG. 1 is a diagram showing a battery cell pressurizing device according to an embodiment of the present disclosure.
FIG. 2 is a diagram showing an example of a battery cell.
FIG. 3 is a diagram showing mounting tables of the battery cell pressurizing device according to an embodiment of the present disclosure.
FIG. 4 is a diagram showing the mounting table and a pressure-sensitive sensor of the battery cell pressurizing device according to an embodiment of the present disclosure.
FIG. 5 is an enlarged view showing part E1 of FIG. 4.
FIG. 6 is a diagram showing a buffer pad of the battery cell pressurizing device according to an embodiment of the present disclosure.
FIG. 7 is a diagram showing a stopper of the battery cell pressurizing device according to an embodiment of the present disclosure.
FIG. 8 is a flowchart for illustrating an abnormal battery cell detection process of the battery cell pressurizing device according to an embodiment of the present disclosure.
FIG. 9 is a block diagram showing a battery cell manufacturing system according to an embodiment of the present disclosure.

### BEST MODE

Hereinafter, embodiments according to the present disclosure will be described in detail with reference to the accompanying drawings to clarify solutions for the technical problems of the present disclosure. However, in describing the present disclosure, a description of related known technology, which may obscure the subject matter of the present disclosure, may be omitted. In addition, the terms used in this specification are defined in consideration of the functions in the present disclosure and may vary depending on the intention of the designer, manufacturer, etc. or custom thereof. Therefore, definitions of the terms described below should be made based on the description throughout this specification.

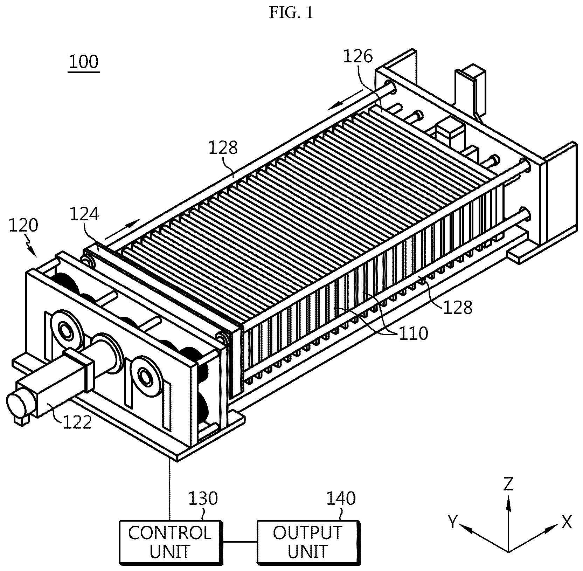

FIG. 1 shows a battery cell pressurizing device 100 according to an embodiment of the present disclosure.

As shown in FIG. 1, the battery cell pressurizing device 100 according to an embodiment of the present disclosure includes a mounting table 110 and a pressurizing unit 120.

The mounting table 110 is configured so that at least one battery cell is mounted thereon. The battery cell pressurizing device 100 includes a plurality of such mounting tables 110. The plurality of mounting tables 110 are arranged side by side in one direction.

The pressurizing unit 120 is configured to pressurize the battery cells mounted on the plurality of mounting tables 110 by pressing the plurality of mounting tables 110 in a direction in which the plurality of mounting tables 110 come into close contact with each other.

As will be explained later again, the battery cell pressurizing device 100 further includes a plurality of pressure-sensitive sensors. The plurality of pressure-sensitive sensors are distributed on the plurality of mounting tables 110, and are configured to detect the pressure applied to the battery cells mounted on each mounting table 110 separately for each battery cell or detect the pressure applied to different parts of each battery cell.

For example, when the battery cells are mounted on the plurality of mounting tables 110, the pressurizing unit 120 may pressurize the corresponding battery cells by pressing the plurality of mounting tables 110 into close contact with each other. For this purpose, the pressurizing unit 120 may include a motor 122 that generates a driving force, first and second pressurizing plates 124, 126 that move by the driving force of the motor 122 to pressurize the mounting tables, and may include a guide shaft 128 that guides the first and second pressing plates 124, 126 so that the first and second pressurizing plates 124, 126 press the plurality of mounting tables 110.

In an embodiment, the first and second pressurizing plates 124, 126 of the pressurizing unit 120 may be configured to move by the driving force of the motor 122, but the second pressurizing plate 126 may also be configured to be fixed at a predetermined position.

Also, in an embodiment, the battery cell pressurizing device 100 may include a control unit 130. In this case, the control unit 130 may be configured to control the overall operation of the battery cell pressurizing device 100.

In particular, the control unit 130 is configured to detect an abnormal battery to which a pressure that does not meet a predetermined pressure condition is applied among the battery cells mounted on the plurality of mounting tables 110 by using the detection results of the pressure-sensitive sensors distributed on the plurality of mounting tables 110. For example, the pressure condition may include a first condition in which the pressure applied to each battery cell must fall within a predetermined first pressure range, and a second condition in which the pressure applied to different parts of each battery cell must fall within a predetermined second pressure range.

Also, the control unit 130 may stop the operation of the pressurizing unit 120 when an abnormal battery cell, to which a pressure that does not meet the pressure condition is applied, is detected.

The control unit 130 may include a general-purpose processor or an application-specific integrated circuit (ASIC) for executing the above control logic, and may optionally further include various hardware such as registers and memory. The control unit 130 may be implemented by combining hardware and software. That is, the control logic of the control unit 130 may be composed using a computer program and stored in the memory of the control unit 130 or an external memory (not shown), and the stored computer program may be executed through the hardware of the control unit 130.

In an embodiment, the battery cell pressurizing device 100 may include an output unit 140. In this case, when the abnormal battery cell is detected by the control unit 130, the output unit 140 may be configured to output identification information identifying the mounting table on which the abnormal battery cell is mounted among the plurality of mounting tables 110. In this case, the identification information may be output as a visual signal, an auditory signal, or an audiovisual signal. Depending on the embodiment, the output unit 140 may be configured to output the identification information along with a predetermined alarm signal.

The output unit 140 may optionally include a visual output device such as a monitor, a display panel, a touch screen, or a light emitting diode. Also, the output unit 140 may include an audio device such as a speaker.

In this way, since the control unit 130 detects an abnormal battery cell to which pressure that does not meet a predetermined pressure condition is applied by using the detection results of the pressure-sensitive sensors and outputs identification information identifying the mounting table on which the abnormal battery cell is mounted through the output unit 140, it is possible to respond quickly to the occurrence of the abnormal battery cell and reduce the defect rate of manufactured battery cells.

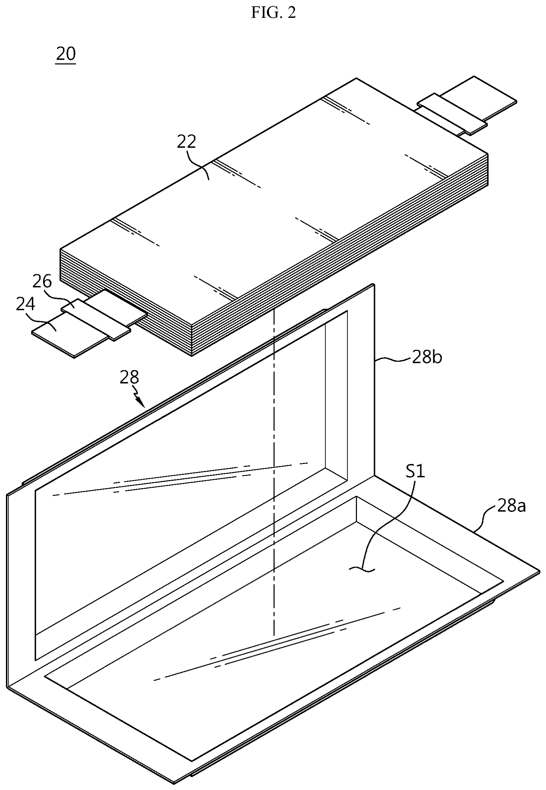

FIG. 2 shows an example of a battery cell 20.

As shown in FIG. 2, the battery cell 20 may include an electrode assembly 22 prepared by stacking a positive electrode and a negative electrode with a separator interposed therebetween, and a case 28 that accommodates the electrode assembly 22 together with an electrolyte material in the inner space S1.

Also, the battery cell 20 may further include an electrode lead 24 electrically connected to the electrode assembly 22, and a sealing tape 26 that seals the circumference of the electrode lead 24.

The case 28 of the battery cell 20 may include a first case portion 28a and a second case portion 28b that are coupled to each other to form the inner space S1. The case 28 may be sealed by hermetically coupling the edge portion of the first case portion 28a and the edge portion of the second case portion 28b in a state where the electrode assembly 22 is accommodated in the inner space S1.

The battery cell 20 assembled in this way goes through a pressurization process in which the battery cell 20 is pressed to a predetermined pressure in order to impregnate the electrode assembly 22 with the electrolyte material accommodated in the battery cell 20.

In addition, the assembled battery cell 20 undergoes a short-circuit test process in which the current of the corresponding battery cell 20 is checked while pressing the corresponding battery cell 20 through a high pressure current detection (HPCD) device.

The battery cell pressurizing device 100 according to the present disclosure may increase the manufacturing efficiency of battery cells and reduce manufacturing costs by enabling the pressurization process and the short circuit test process described above to be performed in an integrated way.

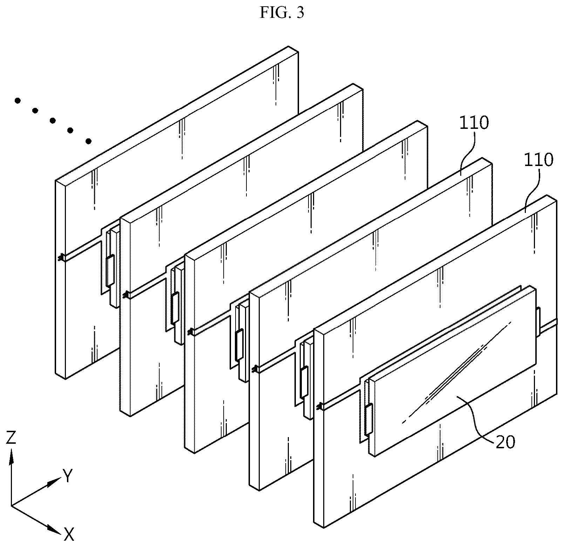

FIG. 3 shows mounting tables of the battery cell pressurizing device according to an embodiment of the present disclosure.

As shown in FIG. 3, the battery cell pressurizing device 100 may include mounting tables arranged adjacent to each other.

Each mounting table 110 may be configured so that at least one battery cell 20 is mounted thereon. Also, the mounting tables on which the battery cells 20 are mounted may be stacked in one direction (X-axis direction) and arranged side by side.

The pressurizing unit 120 of the battery cell pressurizing device 100 described above may pressurize the mounting tables in a direction in which the mounting tables come into close contact with each other using the pressurizing plates 124, 126 disposed at both ends of the mounting tables. Since the mounting tables are pressured in this way in a direction in which the mounting tables come into close contact with each other, the battery cells mounted on the corresponding mounting tables may be pressurized.

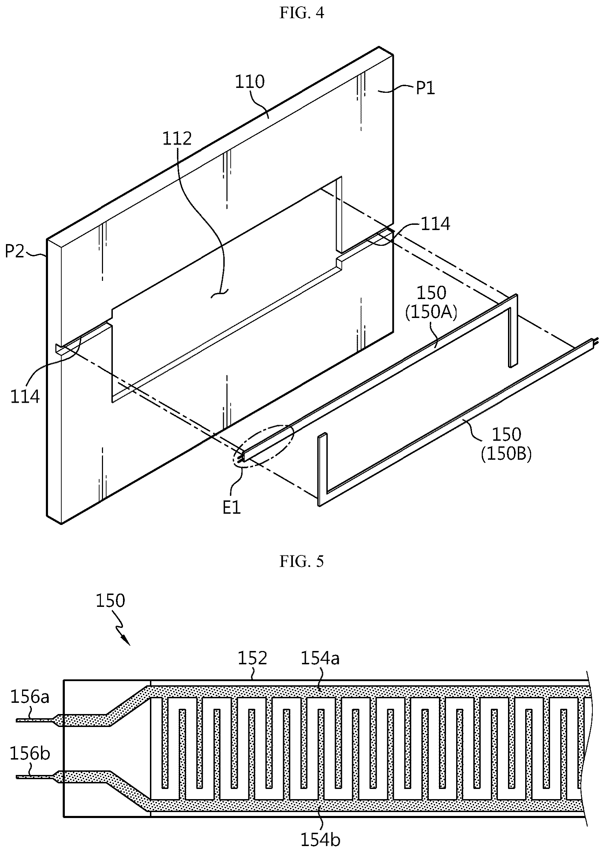

FIG. 4 shows the mounting table 110 and a pressure-sensitive sensor 150 of the battery cell pressurizing device according to an embodiment of the present disclosure.

As shown in FIG. 4, the mounting table 110 has a plate shape as a whole and may have a mounting groove 112 in which the battery cell is mounted.

For example, the mounting table 110 may include a mounting portion P1 having a mounting groove 112 in which the first battery cell is mounted, and a pressing portion P2 configured to press the second battery cell mounted on the other mounting table by the pressing force of the pressurizing unit 120.

The pressure-sensitive sensor 150 may be disposed inside the mounting groove 112 of the corresponding mounting table 110. In this case, the pressure-sensitive sensor 150 may be disposed between the inner surface of the mounting groove 112 and the battery cell mounted in the corresponding mounting groove 112.

In an embodiment, the pressure-sensitive sensor 150 may have a strap shape extending along the inner surface of the mounting groove 112 to detect the pressure applied to the entire battery cell. In this case, the mounting table 110 may have a connection groove 114 that provides a connection passage between the pressure-sensitive sensor 150 and the control unit 130 or another device disposed outside the mounting table 110. That is, one end of the pressure-sensitive sensor 150 may be extended through the connection groove 114 of the mounting table 110 and connected to the control unit 130 or another device.

In an embodiment, the pressure-sensitive sensor 150 may be configured to detect pressure applied to different parts of the battery cell by distinguishing the pressure for each part of the battery cell. To this end, the pressure-sensitive sensor 150 may include pressure-sensitive sensors 150A, 150B arranged together on the same mounting table 110. In this case, the pressure-sensitive sensors 150A, 150B disposed together on the same mounting table 110 may be configured to detect pressure applied to different parts of the battery cell mounted on the corresponding mounting table 110.

FIG. 5 is an enlarged view showing part E1 of FIG. 4.

As shown in FIG. 5, the pressure-sensitive sensor 150 of the battery cell pressurizing device 100 according to an embodiment of the present disclosure may be configured to have a resistance value that changes depending on the pressure applied to the corresponding pressure-sensitive sensor 150. In this case, the pressure-sensitive sensor 150 may include an insulating film-type substrate 152, conductive patterns 154a, 154b formed on the substrate 152 at intervals, and terminals 156a, 156b for electrical connection between the conductive patterns 154a, 154b.

In another embodiment, the pressure-sensitive sensor 150 may be configured to have a voltage value or current value that changes depending on the pressure applied to the pressure-sensitive sensor 150. In this case, the pressure-sensitive sensor 150 may include an insulating film-type substrate, piezoelectric elements disposed on the substrate, and terminals for electrical connection of the piezoelectric elements.

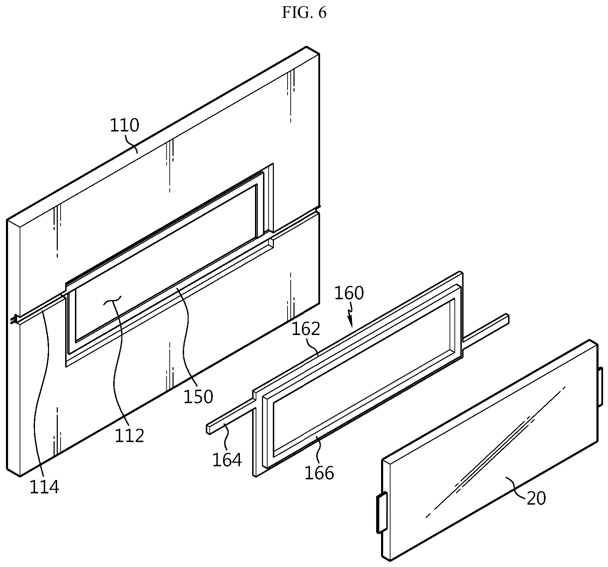

FIG. 6 shows a buffer pad 160 of the battery cell pressurizing device according to an embodiment of the present disclosure.

As shown in FIG. 6, the battery cell pressurizing device 100 according to an embodiment of the present disclosure may include a buffer pad 160. In this case, the buffer pad 160 may be inserted into the mounting groove 112 of the mounting table 110 and disposed inside the mounting groove 112. That is, the buffer pad 160 may be disposed between the inner surface of the mounting groove 112 and the battery cell mounted in the mounting groove 112, and may be configured to relieve the pressure applied to the mounted battery cell. In this case, the pressure-sensitive sensor 150 may be disposed between the inner surface of the mounting groove 112 and the buffer pad 160.

In an embodiment, the buffer pad 160 includes a body portion 162 disposed inside the mounting groove 112 to support the battery cell 20, and an extending portion 164 extending from the body portion 162 and disposed inside the connection groove 114 of the mounting table 110 described above. In this case, the extending portion 164 may be configured to cover one end of the pressure-sensitive sensor 150 disposed inside the connection groove 114.

Also, the buffer pad 160 may further include a support portion 166. The support portion 166 may be configured to protrude toward the battery cell 20 from one side of the body portion 162 facing the battery cell 20 and support the battery cell 20. The support portion 166 is provided at a position corresponding to the pressure-sensitive sensor 150, and may allow the pressure-sensitive sensor 150 to easily sense the pressure applied to the battery cell 20.

The buffer pad 160 may be made of a material with a certain amount of elasticity. For example, the buffer pad 160 may be made of a material containing a polymer resin such as urethane.

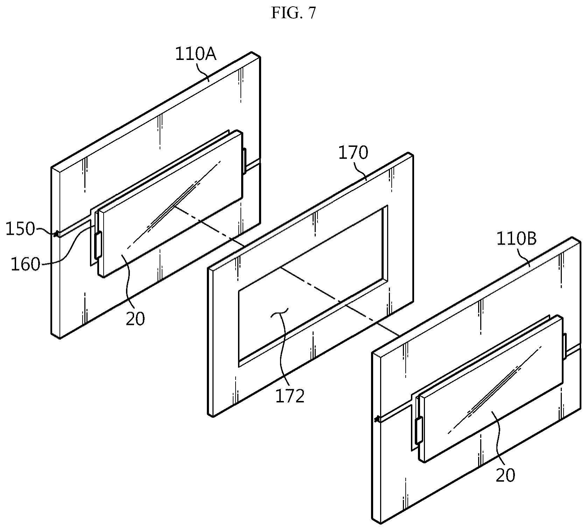

FIG. 7 shows a stopper 170 of the battery cell pressurizing device according to an embodiment of the present disclosure.

As shown in FIG. 7, the battery cell pressurizing device 100 according to an embodiment of the present disclosure may include a stopper 170. In this case, the stopper 170 is disposed between neighboring mounting tables 110A, 110B among the plurality of mounting tables of the battery cell pressurizing device 100, and is configured to limit the gap between the neighboring mounting tables 110A, 110B.

In an embodiment, the stopper 170 has a plate structure, and may have a through hole 172 at the center of the plate structure where the battery cell 20 mounted on one mounting table 110A among the neighboring mounting tables 110A, 110B is located.

According to the present disclosure, when the thickness of the battery cells to be pressed is changed, the pressure applied to the battery cells to be pressed may be appropriately adjusted by changing the thickness or number of stoppers 170 disposed between the mounting tables.

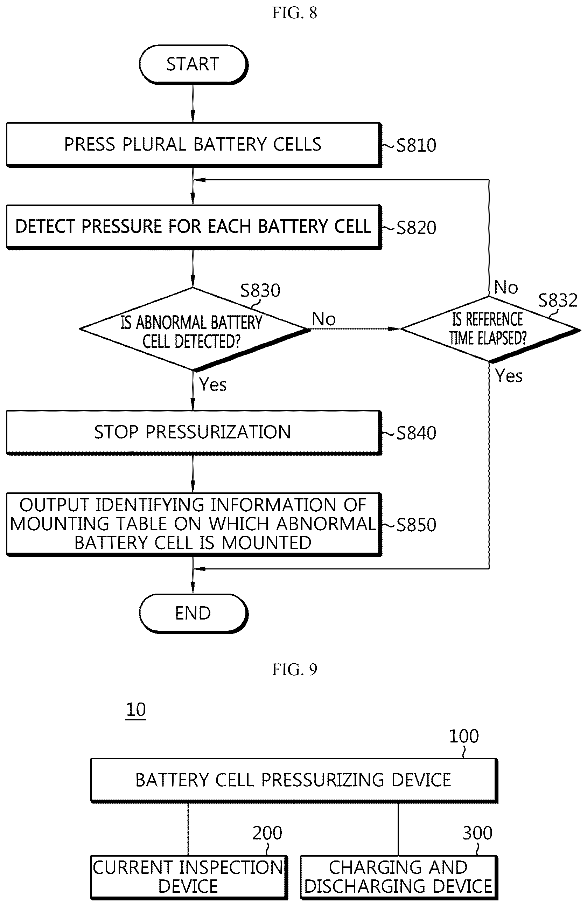

FIG. 8 is a flowchart for illustrating an abnormal battery cell detection process of the battery cell pressurizing device according to an embodiment of the present disclosure.

As shown in FIG. 8, when the assembled battery cells are respectively mounted on the plurality of mounting tables 110 described above, the pressurizing unit 120 of the battery cell pressurizing device 100 presses the plurality of mounting tables 110 in a direction in which the plurality of mounting tables 110 come into close contact with each other, thereby pressurizing the battery cells mounted on the plurality of mounting tables 110 for a predetermined reference time (S810).

While the battery cells are pressurized, the plurality of pressure-sensitive sensors 150 distributed on the plurality of mounting tables 110 detect the pressure applied to the battery cells mounted on each mounting table 110 separately for each battery cell, or detect the pressure separately for different parts of each battery cell (S820).

Then, the control unit 130 of the battery cell pressurizing device 100 detects an abnormal battery cell to which pressure that does not meet a predetermined pressure condition is applied among the battery cells mounted on the plurality of mounting tables 110 by using the detection results of the pressure-sensitive sensors (S830).

For example, the control unit 130 may detect, among the pressurized battery cells, a battery cell to which pressure deviating from a predetermined first pressure range is applied or a battery cell to which pressure is applied unevenly as a whole as an abnormal battery cell.

If an abnormal battery cell is detected in this way, the control unit 130 may control the pressurizing unit 120 to stop the operation of the pressurizing unit 120 (S840).

Also, the control unit 130 may control the output unit 140 to output identification information identifying the mounting table on which the abnormal battery cell is mounted as a visual signal, an auditory signal, or an audiovisual signal (S850). In this case, the output unit 140 may output the identification information along with a predetermined alarm signal.

Meanwhile, the control unit 130 may repeat the above-described processes (S820, S830) for a predetermined reference time if no abnormal battery cell is detected among the pressurized battery cells (S832).

FIG. 9 is a block diagram showing a battery cell manufacturing system 10 according to an embodiment of the present disclosure.

As shown in FIG. 9, the battery cell manufacturing system 10 according to an embodiment of the disclosure includes the battery cell pressurizing device 100 according to the present disclosure. Depending on the embodiment, the battery cell manufacturing system 10 may further include a current inspection device 200 and/or a charging and discharging device 300.

The current inspection device 200 may be configured to detect a defective battery cell among the battery cells by inspecting the current of the battery cells while the assembled battery cells are pressurized by the battery cell pressurizing device 100 according to the present disclosure.

The charging and discharging device 300 may be configured to activate the battery cells by repeatedly charging and discharging the corresponding battery cells while the assembled battery cells are pressurized by the battery cell pressurizing device 100 according to the present disclosure.

In this way, the battery cell manufacturing system 10 according to the present disclosure may increase the battery cell manufacturing efficiency and reduce manufacturing costs by performing a short-circuit test process and an activation process in an integrated way for the assembled battery cells.

As described above, according to the present disclosure, since a plurality of pressure-sensitive sensors are distributed on a plurality of mounting tables respectively configured so that at least one battery cell is mounted thereon and the pressure applied to the battery cell mounted on each mounting table is detected in real time, the time and cost of the pressurization process that pressurizes the battery cells may be reduced, and the pressure applied to the battery cells may be monitored in real time.

In addition, since the pressure-sensitive sensors disposed together on the same mounting table among the plurality of mounting tables detect pressures applied to different parts of the battery cell mounted on the same mounting table, it is possible to detect not only pressure deviations between the battery cells but also pressure deviations between different parts of a specific battery cell, and as a result, it is possible to guarantee the uniformity of quality of manufactured battery cells and reduce the defect rate.

In addition, since the control unit detect an abnormal battery cell to which pressure that does not meet a predetermined pressure condition is applied among the battery cells pressurized by the pressurizing unit by using the detection results of the plurality of pressure-sensitive sensors, rapid response is possible when an abnormal battery cell occurs.

Furthermore, the embodiments according to the present disclosure may also solve various other technical problems other than those mentioned in this specification in the related technical fields, as well as the relevant technical field.

So far, the present disclosure has been described with reference to specific embodiments. However, those skilled in the art will clearly understand that various modified embodiments may be implemented within the technical scope of the present disclosure. Therefore, the previously disclosed embodiments should be considered as those intended to describe the present disclosure, instead of those intended to limit the present disclosure. In other words, the true scope of the technical idea of the present disclosure is shown in the claims, and all differences within the scope equivalent thereto should be construed as being included in the present disclosure.

### Reference Signs

10: battery cell manufacturing system
100: battery cell pressurizing device
110: mounting table
112: mounting groove
114: connection groove
120: pressurizing unit
130: control unit
140: output unit
150: pressure-sensitive sensor
160: buffer pad
170: stopper

## Claims

1. A battery cell pressurizing device, comprising:
a plurality of mounting tables respectively configured so that at least one battery cell is mounted thereon, the plurality of mounting tables being arranged side by side in one direction;
a pressurizing unit configured to pressurize the battery cells mounted on the plurality of mounting tables by pressing the plurality of mounting tables in a direction in which the plurality of mounting tables come into close contact with each other; and
a plurality of pressure-sensitive sensors distributed on the plurality of mounting tables and configured to detect pressure applied to the battery cells mounted on each mounting table separately for each battery cell or to detect the pressure separately for different parts of each battery cell.

2. The battery cell pressurizing device according to claim 1,
wherein each of the plurality of mounting tables has a mounting groove in which the at least one battery cell is mounted.

3. The battery cell pressurizing device according to claim 2,
wherein each of the plurality of pressure-sensitive sensors is disposed inside the mounting groove of a corresponding mounting table among the plurality of mounting tables.

4. The battery cell pressurizing device according to claim 3,
wherein each of the plurality of pressure-sensitive sensors is disposed between an inner surface of the mounting groove and the battery cell mounted in the mounting groove, and has a strap shape extending along the inner surface of the mounting groove.

5. The battery cell pressurizing device according to claim 2, further comprising:
a buffer pad disposed between an inner surface of the mounting groove and the battery cell mounted in the mounting groove to relieve pressure applied to the mounted battery cell.

6. The battery cell pressurizing device according to claim 1,
wherein the plurality of pressure-sensitive sensors include pressure-sensitive sensors disposed together on the same mounting table, and
wherein the pressure-sensitive sensors disposed together on the same mounting table are configured to detect pressure applied to different parts of the battery cell mounted on the same mounting table.

7. The battery cell pressurizing device according to claim 1,
wherein the plurality of mounting tables include a first mounting table and a second mounting table arranged adjacent to each other, and
wherein the first mounting table includes:
a mounting portion on which a first battery cell is mounted; and
a pressurizing portion configured to pressurize a second battery cell mounted on the second mounting table by the pressing force of the pressurizing unit.

8. The battery cell pressurizing device according to claim 1, further comprising:
a stopper interposed between neighboring mounting tables among the plurality of mounting tables to limit a gap between the neighboring mounting tables.

9. The battery cell pressurizing device according to claim 8,
wherein the stopper has a plate structure and has a through hole at a center of the plate structure where the battery cell mounted on one of the neighboring mounting tables is located.

10. The battery cell pressurizing device according to claim 1, further comprising:
a control unit configured to detect an abnormal battery cell to which pressure that does not meet a predetermined pressure condition is applied among the battery cells, by using the detection results of the plurality of pressure-sensitive sensors.

11. The battery cell pressurizing device according to claim 10,
wherein the control unit is configured to stop the operation of the pressurizing unit when the abnormal battery cell is detected.

12. The battery cell pressurizing device according to claim 10, further comprising:
an output unit configured to output identification information identifying the mounting table on which the abnormal battery cell is mounted among the plurality of mounting tables when the abnormal battery cell is detected by the control unit.

13. A battery cell manufacturing system, comprising the battery cell pressurizing device according to any one of claims 1 to 12.
